# EUROPÄISCHE PATENTSCHRIFT

(11) **EP 3 465 874 B1**
(45) Veröffentlichungstag und Bekanntmachung des Hinweises auf die Patenterteilung: **08.04.2020**
(21) Anmeldenummer: 17734660.8
(22) Anmeldetag: 19.06.2017
(51) Int. Cl.: H02K 1/08

(54) **ROTOR FÜR EINE ELEKTRISCHE ROTIERENDE MASCHINE**
ROTOR FOR AN ELECTRIC ROTATING MACHINE
ROTOR DE MACHINE ROTATIVE ÉLECTRIQUE

(30) Priorität: 14.07.2016 EP 16179483
(43) Veröffentlichungstag der Anmeldung: 10.04.2019
(73) Patentinhaber: Siemens Aktiengesellschaft, 80333 München (DE)
(72) Erfinder: FESTA, Marco, 14612 Falkensee (DE); CENTNER, Matthias, 10555 Berlin (DE); SABELFELD, Ilja, 10119 Berlin (DE)
(86) Internationale Anmeldenummer: PCT/EP2017/064909
(87) Internationale Veröffentlichungsnummer: WO 2018/010912

(56) Entgegenhaltungen:
- DE-A1- 2 116 821
- JP-A- S5 959 033
- JP-U- S6 172 048
- US-A- 5 949 172

## Beschreibung

Die Erfindung betrifft einen Rotor für eine elektrische rotierende Maschine, insbesondere eine Synchronmaschine, mit einer um eine Rotationsachse rotierbaren Welle und mindestens einem Polschuh.

Darüber hinaus betrifft die Erfindung eine elektrische rotierende Maschine, insbesondere eine Synchronmaschine, mit einem derartigen Rotor.

Die Erfindung betrifft ferner ein Verfahren zur Herstellung eines derartigen Rotors.

Ein derartiger Rotor kommt insbesondere bei direktanlaufenden Synchron-Schenkelpolmaschinen mit aufgesetzten Polschuhen zum Einsatz. Aufgesetzte Polschuhe kommen im Wesentlichen bei Großantrieben mit einer Leistung von mindestens 1 Megawatt vor.

Ein direkter Anlauf ist ein mitunter kostengünstiges Verfahren, einen Anlauf am Netz zu realisieren, wobei die Synchronmaschine asynchron angefahren und in der Nähe der Synchrondrehzahl in den synchronen Betrieb versetzt wird. Bei einem asynchronen Anlauf muss der Läufer so gestaltet sein, dass die für den Anlauf notwendigen Ströme fließen können, wobei Rotoren mit massiven Polen die Leitfähigkeit der Poloberfläche nutzen können.

Beim asynchronen Anlauf einer Synchron-Schenkelpolmaschine werden Wirbelströme in die aufgesetzten Polschuhe induziert, wobei insbesondere die Oberfläche der Polschuhe durch magnetische Wechselfelder, insbesondere durch Wirbelströme, stark aufgeheizt werden. Bei großen Synchronmaschinen mit einer Leistung von mindestens 1 Megawatt wird darüber hinaus gefordert, dass sie bei einem definierten Gegenmoment anlaufen können. Bei einem derartigen Gegenmoment können an den Oberflächen der Polschuhe Temperaturen von mehreren hundert Grad Celsius auftreten.

Hervorgerufen durch eine hohe Temperaturdifferenz zwischen einem Polschuh und einem Polschaft können große Scherkräfte an einer Trennfuge zwischen Polschuh und Polschaft auftreten. Ein derartig hoher Temperaturunterschied zwischen einer Unterseite und einer Oberseite des Polschuhs führt zu einer Verformung, insbesondere Aufwölbung, des Polschuhs. Da die Verformung durch von elektromagnetischen Wechselfeldern oder Wirbelströmen erzeugten Temperaturdifferenzen verursacht wird, spricht man von einer elektromagnetisch induzierten thermischen Verformung. Durch eine derartige elektromagnetisch induzierte thermische Verformung können sich der Polschuh und der Polschaft relativ zueinander bewegen. Die mit der Verformung und Verschiebung einhergehenden Masseverschiebungen des Polschuhs wirken sich negativ auf den Wuchtzustand des Rotors und damit auf das Schwingungsverhalten aus.

Die Patentschrift US 5,949,172 A beschreibt einen Motor mit einer Antriebsspule, welche um einen Schenkelpol gewickelt ist. Eine Öffnungsweite eines Ankerkerns ist ausreichend groß gehalten, um die Antriebsspule ordnungsgemäß und leicht abwickeln zu können. Nach dem Wickeln der Antriebsspule wird eine Magnetfluss-Sammelplatte auf einer äußeren Umfangsfläche eines bogenförmigen Bereichs des Schenkelpols montiert. Bei dem Montagevorgang sind jeweils zwei in der Magnetfluss-Sammelplatte ausgebildete klauenförmige Positionierungseingriffsabschnitte in Nuten (119) eingepasst, die jeweils in den oberen und unteren Stirnflächen des Ankerkerns angeordnet sind.

Die Offenlegungsschrift JP S59 59033 A beschreibt einen Pol für einen Schenkelpolläufer, wobei eine Spule auf einen Polkörper des Pols gewickelt ist, der einstückig von einer Drehwelle hervorsteht. Ein Polschuh wird auf dem Polkörper mit einem Bolzen befestigt, um die Spule zu tragen, wobei der Kopf des Bolzens in einem Bohrloch des Polschuhs versenkt wird. Um lokale Temperaturerhöhungen zu eliminieren, wird die Öffnung des Bohrlochs des Polschuhs mit einer magnetischen Platte verschlossen, die im Wesentlichen glatt wie die Oberfläche des Polschuhs ausgebildet ist.

Die Offenlegungsschrift DE 21 16 821 A1 beschreibt einen Massivpol von einem in einem asynchronen Bereich anlaufenden elektrischen Motor, welcher mindestens einen geschlossenen Kühlkreis aufweist, von dem sich wenigstens ein Teil in einem umfänglichen Polbereich und ein anderer Teil in einem Bereich eines Polfußes befindet. Im Kühlkreis ist ein Wärmeträgerfluid enthalten, das während des Anlaufs des Motors unter Einwirkung von Einflussgrößen wie Beschleunigung, Geschwindigkeit und Erwärmung einen natürlichen Umstrom bildet.

Der Erfindung liegt die Aufgabe zugrunde, einen Rotor für eine elektrische rotierende Maschine anzugeben, welcher, im Vergleich zum Stand der Technik, bei einer lokalen Erwärmung der Polschuhe ein verbessertes Schwingungsverhalten aufweist.

Die Aufgabe wird erfindungsgemäß durch einen Rotor für eine elektrische rotierende Maschine, insbesondere eine Synchronmaschine, mit einer um eine Rotationsachse rotierbaren Welle und mindestens einem Polschuh gelöst, wobei der Polschuh einen Polschuhkörper und ein Polschuhblech aufweist, wobei das Polschuhblech auf einer radial äußeren Oberfläche des Polschuhkörpers aufliegt, wobei das Polschuhblech an mehreren Verbindungspunkten mit dem Polschuhkörper verbunden ist und wobei das Polschuhblech zwischen den Verbindungspunkten zumindest in axialer Richtung durch Wölbungen und/oder Rillen flexibel ausgebildet ist.

Darüber hinaus wird die Aufgabe erfindungsgemäß durch einen Rotor für eine elektrische rotierende Maschine, insbesondere eine Synchronmaschine, mit einer um eine Rotationsachse rotierbaren Welle und mindestens einem Polschuh gelöst, wobei der Polschuh einen Polschuhkörper und ein Polschuhblech aufweist, wobei das Polschuhblech auf einer radial äußeren Oberfläche des Polschuhkörpers aufliegt, wobei das Polschuhblech mindestens zwei geschichtete Einzelbleche umfasst.

Die Aufgabe wird darüber hinaus durch eine elektrische rotierende Maschine, insbesondere eine Synchronmaschine, mit einem derartigen Rotor gelöst.

Ferner wird die Aufgabe durch ein Verfahren zur Herstellung eines derartigen Rotors gelöst.

Die in Bezug auf den Rotor nachstehend angeführten Vorteile und bevorzugten Ausgestaltungen lassen sich sinngemäß auf die elektrische rotierende Maschine und das Herstellungsverfahren übertragen.

Die Erfindung basiert auf der Idee das Schwingungsverhalten des Rotors zu verbessern, indem man ein Polschuhblech auf der radial äußeren Oberfläche des Polschuhkörpers befestigt. Die radial äußere Oberfläche des Polschuhkörpers ist die Oberfläche, welche im Betrieb des Rotors in einer elektrischen rotierenden Maschine an einen Spalt zwischen dem Rotor und einem Stator angrenzt. Beispielsweise bei einem asynchronen Anlauf entstehende Wirbelströme fließen zumindest zu einem großen Teil im Polschuhblech, welches sich durch die Wirbelströme erwärmt und ausdehnt. Die Ausdehnung bewirkt lediglich eine elastische Verformung des Polschuhblechs. Die radial äußere Oberfläche des Polschuhkörpers erhitzt sich kaum, weswegen keine signifikante elektromagnetisch induzierte thermische Verformung des Polschuhkörpers auftritt.

Das Polschuhblech ist an mehreren Verbindungspunkten mit dem Polschuhkörper verbunden. Durch eine derartige punktuelle Verbindung ist das Polschuhblech mit dem Polschuhkörper mechanisch und elektrisch leitend verbunden. Durch die punktuelle Verbindung wird ein Temperaturausgleich zwischen dem Polschuhblech und dem Polschuhkörper erschwert.

Das Polschuhblech ist zwischen den Verbindungspunkten zumindest in axialer Richtung flexibel ausgebildet. Unter einer flexiblen Ausbildung ist zu verstehen, dass das Polschuhblech beweglich, gleitfähig und/oder verformbar auf der Oberfläche des Polschuhs angeordnet ist. Durch diese flexible Ausbildung kann sich das Polschuhblech, insbesondere zwischen den Verbindungspunkten, unabhängig vom Polschuhkörper, beispielsweise durch wirbelstrominduziertes Erhitzen, verformen.

Durch Wölbungen und/oder Rillen auf dem Polschuhblech werden die mechanischen und elektrischen Eigenschaften des Polschuhblechs gezielt beeinflusst. Durch Wölbungen ist das Polschuhblech, beispielsweise durch eine Erwärmung aufgrund von Wirbelströmen, insbesondere in axiale Richtung, leichter und gezielter verformbar.

Durch die Verwendung von mindestens zwei übereinander angeordneten geschichteten Einzelblechen können insgesamt dickere Blechschichten realisiert werden, während eine hohe Flexibilität erhalten bleibt.

In einer bevorzugten Ausführungsform ist das Polschuhblech an mehreren Verbindungspunkten über Verbindungselemente und/oder über eine stoffschlüssige Verbindung mit dem Polschuhkörper verbunden. Verbindungselemente, insbesondere lösbare Verbindungselemente sind beispielsweise Schrauben. Eine stoffschlüssige Verbindung ist insbesondere eine Schweißverbindung. Durch eine derartige punktuelle Verbindung ist das Polschuhblech mit dem Polschuhkörper mechanisch und elektrisch leitend verbunden. Durch die punktuelle Verbindung wird ein Temperaturausgleich zwischen dem Polschuhblech und dem Polschuhkörper erschwert.

Bei einer bevorzugten Ausgestaltung weist das Polschuhblech eine Profilierung auf. Unter einer Profilierung sind, bezogen auf eine Bezugsebene, Erhöhungen und/oder Vertiefungen, insbesondere Wölbungen und/oder Rillen, auf dem Polschuhblech und/oder Aussparungen, insbesondere Schlitze, im Polschuhblech zu verstehen. Durch eine derartige Profilierung können die mechanischen und elektrischen Eigenschaften des Polschuhblechs gezielt beeinflusst werden.

Auf vorteilhafte Weise ist die Profilierung zumindest teilweise gewölbt ausgebildet. Unter einer Wölbung ist, bezogen auf eine Bezugsebene, eine Erhöhung oder eine Vertiefung zu verstehen, wobei insbesondere die Länge oder die Breite der Wölbung signifikant größer ist als die Tiefe der Wölbung. Durch derartige Wölbungen ist das Polschuhblech leichter und gezielter verformbar.

Bevorzugt weist die Profilierung Schlitze und/oder Löcher auf, wobei die Schlitze zumindest in axiale Richtung verlaufen. Löcher sind kreisförmige, ovale, quadratische oder rechteckige Aussparungen im Polschuhblech. Schlitze sind längliche geradlinige oder gekrümmte Aussparungen im Polschuhblech. Löcher und Schlitze, werden beispielsweise durch Stanzen, Laserschneiden, Fräsen, Bohren oder Wasserstrahlschneiden hergestellt. Durch derartige Löcher oder Schlitze wird die mittlere Leitfähigkeit des Polschuhblechs verringert, was zur Beeinflussung des Anlaufdrehmoments genutzt werden kann. Weiterhin können durch derartige Löcher oder Schlitze Wirbelströme zumindest verringert werden.

Vorzugsweise weist die Profilierung Rillen auf. Unter einer Rille ist, bezogen auf eine Bezugsebene, eine Erhöhung oder eine Vertiefung zu verstehen, wobei insbesondere die Breite der Rille kleiner ist als die Tiefe der Rille. Eine derartige Rille versteift das Blech in Richtung des Verlaufs der Rille. Darüber hinaus ist das Polschuhblech leichter und gezielter, insbesondere senkrecht zum Verlauf der Rille, verformbar.

Auf besonders vorteilhafte Weise liegt das Polschuhblech vollflächig auf der radial äußeren Oberfläche des Polschuhkörpers auf. Insbesondere ist das Polschuhblech im Wesentlichen an die Kontur der radial äußeren Oberfläche des Polschuhkörpers angepasst. Dadurch werden auf optimale Weise Wirbelströme auf dem Polschuhkörper zumindest reduziert.

Bevorzugt ist das Polschuhblech aus einem weichmagnetischen Material ausgebildet. Insbesondere besteht das Polschuhblech aus einem Stahl, aus Eisen, Nickel oder Cobalt. Durch die Verwendung eines weichmagnetischen Materials bleibt die effektive Weite des Spalts zwischen dem Rotor und dem Stator, im Vergleich zur Ausgestaltung ohne das Polschuhblech, unverändert, insbesondere wenn die radiale Höhe des Polschuhkörpers um die Blechdicke reduziert wird. Daher wird durch die Verwendung eines weichmagnetischen Materials für das Polschuhblech eine optimale Leistung und Effizienz der elektrischen rotierenden Maschine gewährleistet.

Zweckdienlicherweise weist das Polschuhblech eine Dicke im Bereich von 1 mm bis 10 mm auf. Insbesondere wenige Millimeter genügen, dass ein großer Anteil der thermischen Verluste im Polschuhblech stattfindet. Eine derartige Dicke des Anlaufbleches stellt erfahrungsgemäß das Optimum aus Wirksamkeit und technologischer Machbarkeit dar.

Im Folgenden wird die Erfindung anhand der in den Figuren dargestellten Ausführungsbeispiele näher beschrieben und erläutert.

Es zeigen:
- FIG 1: einen Querschnitt einer elektrischen rotierenden Maschine,
- FIG 2: einen vergrößerten Längsschnitt eines Rotors im Bereich eines Polschuhs mit einer ersten Ausführungsform eines Polschuhblechs,
- FIG 3: eine Draufsicht einer ersten Ausführungsform eines Polschuhblechs,
- FIG 4: eine Draufsicht einer zweiten Ausführungsform eines Polschuhblechs,
- FIG 5: einen vergrößerten Längsschnitt eines Rotors im Bereich eines Polschuhs mit einer dritten Ausführungsform eines Polschuhblechs,
- FIG 6: einen vergrößerten Längsschnitt eines Rotors im Bereich eines Polschuhs mit einer vierten Ausführungsform eines Polschuhblechs,
- FIG 7: einen vergrößerten Längsschnitt eines Rotors im Bereich eines Polschuhs mit einer fünften Ausführungsform eines Polschuhblechs,
- FIG 8: einen vergrößerten Längsschnitt eines Rotors im Bereich eines Polschuhs mit einer sechsten Ausführungsform eines Polschuhblechs und
- FIG 9: einen vergrößerten Ausschnitt eines Rotors im Bereich eines Befestigungspunktes mit einer siebten Ausführungsform eines Polschuhblechs.

Gleiche Bezugszeichen haben in den verschiedenen Figuren die gleiche Bedeutung.

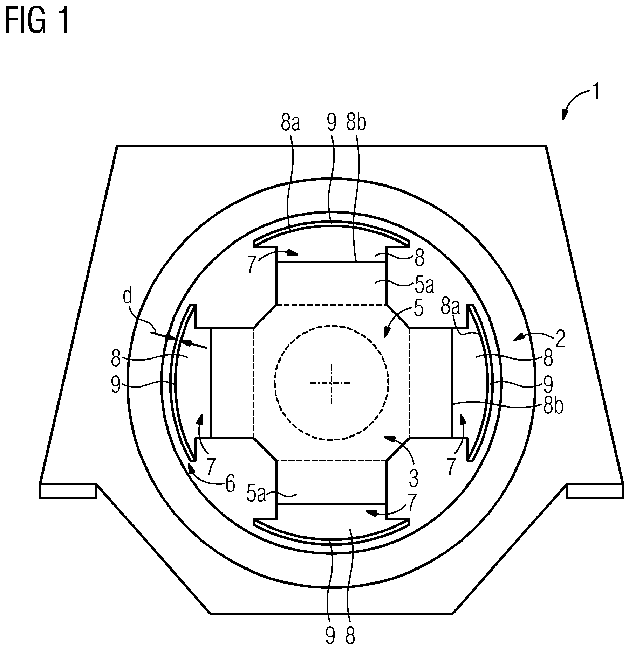

FIG 1 zeigt einen Querschnitt einer elektrischen rotierenden Maschine 1, welche als direktanlaufende Synchronmaschine 1a ausgeführt ist. Die direktanlaufende Synchronmaschine 1a ist mit einer Leistung von mindestens 1 Megawatt betreibbar. Sie weist einen Stator 2 und einen um eine Rotationsachse 4 rotierbaren Rotor 3 auf. Der Stator 2 ist um den Rotor 3 herum angeordnet, wobei sich zwischen dem Stator 2 und dem Rotor 3 ein Spalt 6 befindet. Der Spalt 6 ist als Luftspalt ausgebildet, es können sich aber auch andere Fluide im Spalt 6 zwischen dem Stator 2 und dem Rotor 3 befinden. Die Spulen des Stators 2 und des Rotors 3 sind aus Gründen der Übersichtlichkeit nicht dargestellt. Die Synchronmaschine 1a kann auch ohne Spulen als Synchron-Reluktanzmaschine ausgeführt sein.

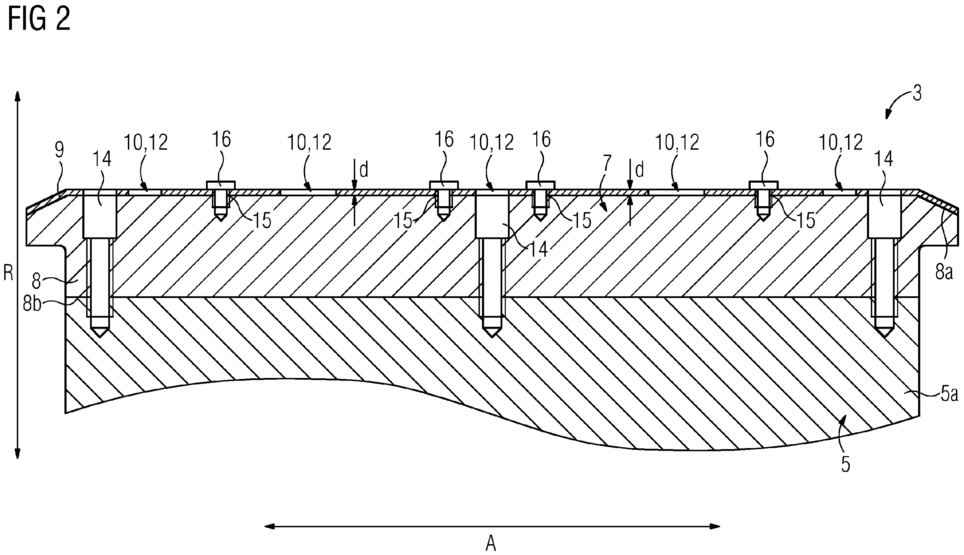

Der Rotor 3 der direktanlaufenden Synchronmaschine 1a weist eine Welle 5 mit exemplarisch vier orthogonal angeordneten Polschäften 5a auf, wobei die Polschäfte 5a jeweils mit Polschuhen 7 versehen sind. Die Welle 5 besteht zumindest hauptsächlich aus einem als Vollmaterial ausgeführten weichmagnetischen Stahl, insbesondere aus einem Vergütungsstahl. Die Polschuhe 7 werden mit Hilfe von Polschuhschrauben 14 (siehe FIG 2) auf die Welle 5 geschraubt. Die Polschuhschrauben 14 sind aus Gründen der Übersichtlichkeit in FIG 1 nicht dargestellt.

Jeder Polschuh 7 umfasst einen Polschuhkörper 8, welcher eine radial äußere Oberfläche 8a und eine radial innere Oberfläche 8b aufweist, und ein Polschuhblech 9. Die radial innere Oberfläche 8b des Polschuhkörpers 8 liegt auf einem Polschaft 5a der Welle 5 auf. Auf der radial äußeren Oberfläche 8a liegt das Polschuhblech 9 auf, welches unmittelbar an den Spalt 6 angrenzt. Der Polschuhkörper 8 besteht zumindest hauptsächlich aus einem als Vollmaterial ausgeführten weichmagnetischen Stahl, insbesondere aus einem Vergütungsstahl. Das Polschuhblech 9 weist eine Dicke d im Bereich von 1 mm bis 10 mm auf und besteht aus einem weichmagnetischen Material insbesondere einem weichmagnetischen Stahl. Das Polschuhblech 9 kann auch aus unterschiedlichen Materialien bestehen, um beispielsweise die Leitfähigkeit gezielt lokal zu beeinflussen. Darüber hinaus kann das Polschuhblech 9 auch mehrere geschichtete Einzelbleche umfassen, welche aus demselben oder unterschiedlichen Materialien bestehen. Bei Verwendung mehrerer übereinander angeordneter Bleche können insgesamt dickere Blechschichten realisiert werden, während eine hohe Flexibilität erhalten bleibt.

FIG 2 zeigt einen vergrößerten Längsschnitt eines Rotors 3 im Bereich eines Polschuhs 7 mit einer ersten Ausführungsform eines Polschuhblechs 9. Der Polschuhkörper 8 des Polschuhs 7 liegt auf einem Polschaft 5a der Welle 5 auf und ist mit dem Polschaft 5a über mehrere Polschuhschrauben 14 befestigt. Der Polschuhkörper 8 kann auch auf eine andere Weise, beispielsweise mit Hilfe einer stoffschlüssigen Verbindung, insbesondere Schweißverbindung, mit dem Polschaft 5a verbunden werden. Das Polschuhblech 9 liegt auf dem Polschuhkörper 8 auf und ist mit diesem an mehreren Verbindungspunkten 15 mit Hilfe von Verbindungselementen 16, insbesondere Schrauben, verbunden. Das Polschuhblech 9 kann alternativ oder zusätzlich über Verbindungselemente 16 durch den Polschuhkörper 8 direkt mit dem Polschaft 5a verbunden werden. Darüber hinaus kann das Polschuhblech 9 an den Verbindungspunkten 15 alternativ oder zusätzlich über eine stoffschlüssige Verbindung 17, insbesondere eine punktuelle Schweißverbindung, mit dem Polschuhkörper 8 verbunden werden.

Das Polschuhblech 9 weist eine Profilierung 10 in Form von Schlitzen 12 auf, welche insbesondere in axiale Richtung A zwischen den Verbindungspunkten 15 verlaufen. Zumindest ein Teil der Schlitze 12 kann auch als weitere Aussparungen, insbesondere als Löcher ausgeführt sein. Schlitze 12 und Bohrungen werden beispielsweise durch Stanzen, Laserschneiden, Fräsen, Bohren oder Wasserstrahlschneiden hergestellt. Auch eine Kombination dieser Herstellungsverfahren ist Gegenstand der Erfindung. Durch derartige Schlitze 12 oder Bohrungen wird die mittlere Leitfähigkeit des Polschuhblechs 9 verändert, insbesondere lokal verringert, was zur Beeinflussung des Anlaufdrehmoments genutzt werden kann. Weiterhin kann durch derartige Schlitze 12 oder Löcher die Ausbreitung von Wirbelströmen zumindest verringert werden.

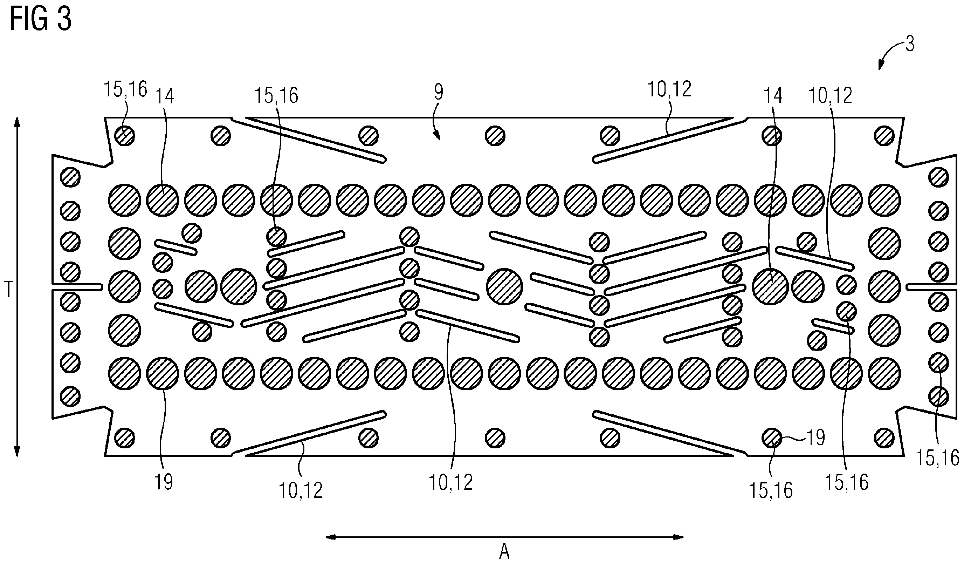

FIG 3 zeigt eine Draufsicht einer ersten Ausführungsform eines Polschuhblechs 9. Das Polschuhblech 9 ist auf dem Rotor 3 montiert, wobei der restliche Rotor 3 aus Gründen der Übersichtlichkeit nicht dargestellt ist. Die Kontur des Polschuhblechs 9 ist an die Kontur der radial äußeren Oberfläche 8a des Polschuhkörpers 8 angepasst und das Polschuhblech 9 liegt vollflächig auf dem Polschuhkörper 8 des Polschuhs 7 auf. Das Polschuhblech 9 weist, insbesondere kreisförmige, Aussparungen 19 für Polschuhschrauben 16 zur Befestigung des Polschuhkörpers 8 an einem Polschaft 5a der Welle 5 auf. Darüber hinaus weist das Polschuhblech 9, insbesondere kreisförmige, Aussparungen 19 für Verbindungselemente 16 auf, welche das Polschuhblech 9 an mehreren Verbindungspunkten 15 mit dem Polschuhkörper 8 verbinden. Sowohl die Aussparungen 19 für die Polschuhschrauben 16 als auch die Aussparungen 19 für die Verbindungselemente 16 sind auf dem Polschuhblech 9 in axiale Richtung A und tangentiale Richtung T angeordnet. Darüber hinaus weist das Polschuhblech 9 eine Profilierung 10 in Form von Schlitzen 12 auf, wobei die Schlitze 12 geradlinig ausgeführt sind und diagonal auf dem Polschuhblech 9 verlaufen. Die Schlitze sind in axiale Richtung im Wesentlichen zwischen den Verbindungspunkten 15 angeordnet. Durch eine derartige Anordnung der Schlitze 12 ist das Polschuhblech 9 zwischen den Verbindungspunkten 15 leichter, insbesondere in axiale Richtung A und tangentiale Richtung T, verformbar.

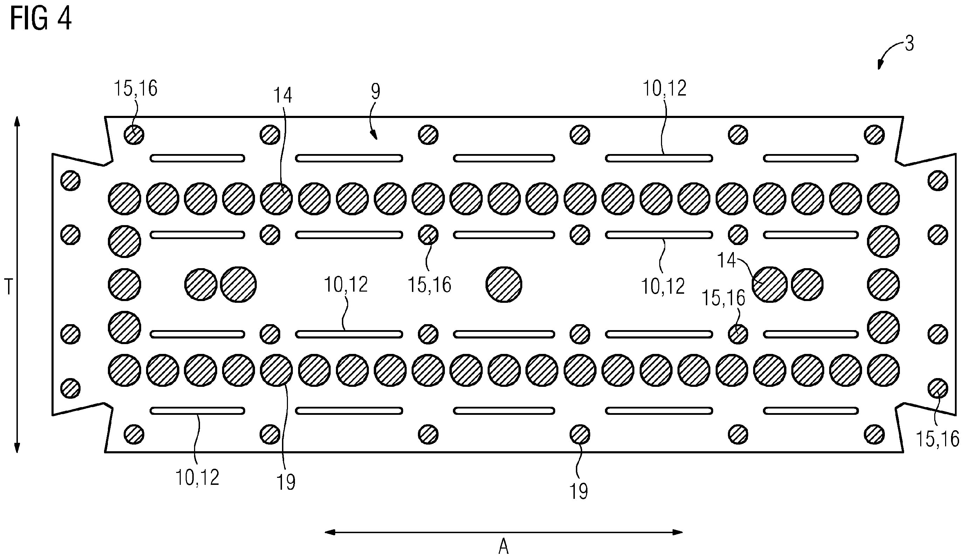

FIG 4 zeigt eine Draufsicht einer zweiten Ausführungsform eines Polschuhblechs 9. Wie in FIG 3 weist das Polschuhblech 9 eine Profilierung 10 in Form von Schlitzen 12 auf. Die geradlinig ausgeführten Schlitze verlaufen in axiale Richtung A und sind zwischen den Verbindungspunkten 15 angeordnet. Durch eine derartige Anordnung der Schlitze 12 ist das Polschuhblech 9 zwischen den Verbindungspunkten 15 leichter, insbesondere in axiale Richtung A und tangentiale Richtung T, verformbar. Die weitere Ausführung des Polschuhblechs 9 entspricht der aus FIG 3.

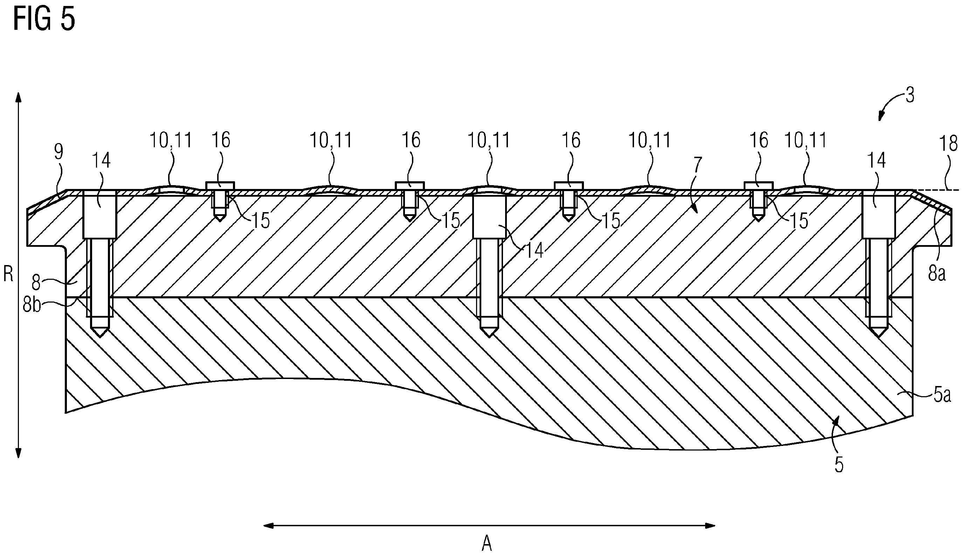

FIG 5 zeigt einen vergrößerten Längsschnitt eines Rotors 3 im Bereich eines Polschuhs 7 mit einer dritten Ausführungsform eines Polschuhblechs 9. Das Polschuhblech 9 weist eine Profilierung 10 auf, welche mehrere Wölbungen 11 umfasst. Die Wölbungen 11 sind, im Verhältnis zu einer Bezugsebene 18, in radiale Richtung R nach außen, das heißt weg vom Polschuh 7, ausgeführt. Darüber hinaus weisen die Wölbungen 11 in tangentiale Richtung T eine konstante oder eine variable Höhe auf. Die Höhe der Wölbungen 11, bezogen auf die Bezugsebene 18, liegt im Bereich von 1 mm bis 10 mm. Durch derartige Wölbungen 11 ist das Polschuhblech 9, beispielsweise durch eine Erwärmung aufgrund von Wirbelströmen, insbesondere in axiale Richtung A, leichter und gezielter verformbar. Die weitere Ausführung des Rotors 3 entspricht der aus FIG 2.

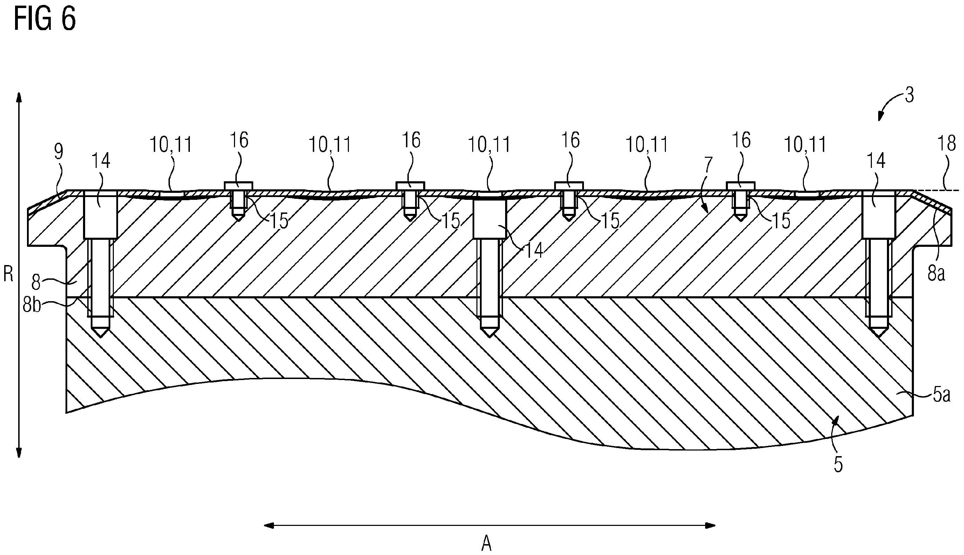

FIG 6 zeigt einen vergrößerten Längsschnitt eines Rotors 3 im Bereich eines Polschuhs 7 mit einer vierten Ausführungsform eines Polschuhblechs 9. Das Polschuhblech 9 weist eine Profilierung 10 auf, welche mehrere, im Verhältnis zu einer Bezugsebene 18, in radiale Richtung R nach innen verlaufende Wölbungen 11 umfasst. Um die Realisierung radial nach innen verlaufender Wölbungen 11 zu ermöglichen, weist die radial äußere Oberfläche 8a des Polschuhkörpers 8 entsprechende Aussparungen auf. Durch derartige radiale nach innen verlaufende Wölbungen 11 wird der Spalt 6 nicht verkleinert und es müssen keine Anpassungen am Stator 2 und am Rotor 3 durchgeführt werden. Die weitere Ausführung des Rotors 3 entspricht der aus FIG 5.

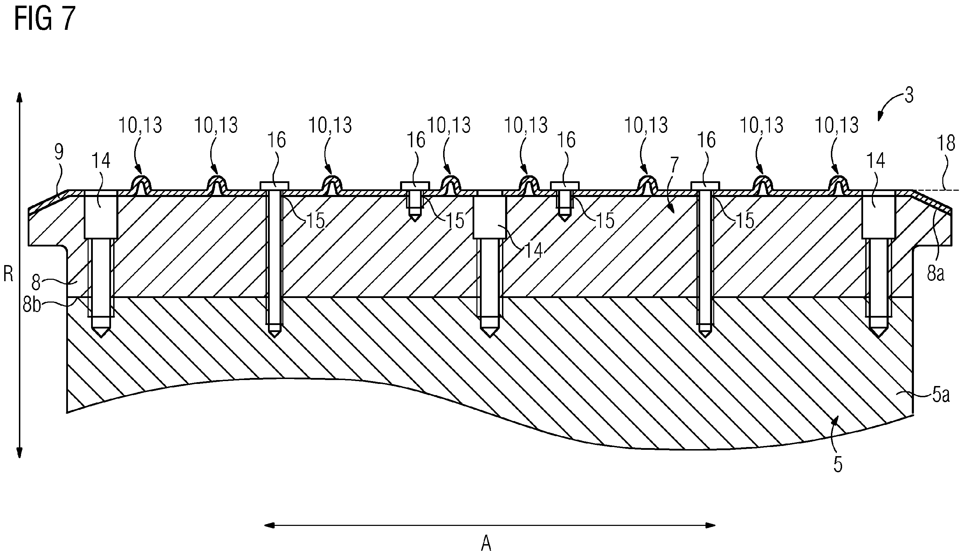

FIG 7 zeigt einen vergrößerten Längsschnitt eines Rotors 3 im Bereich eines Polschuhs 7 mit einer fünften Ausführungsform eines Polschuhblechs 9. Das Polschuhblech 9 weist eine Profilierung 10 auf, welche mehrere Rillen 13 umfasst. Die Rillen 13 sind, im Verhältnis zu einer Bezugsebene 18, in radiale Richtung R nach außen, das heißt weg vom Polschuh 7, ausgeführt. Die Rillen 13 weisen in tangentiale Richtung T eine konstante oder eine variable Höhe auf. Die Höhe der Rillen 13, bezogen auf die Bezugsebene 18, liegt im Bereich von 5 mm bis 25 mm. Durch derartige Rillen 13 ist das Polschuhblech 9, beispielsweise durch eine Erwärmung aufgrund von Wirbelströmen, insbesondere in axiale Richtung A, leichter und gezielter verformbar. Das Polschuhblech 9 weist zusätzlich Verbindungselemente 16 auf, die das Polschuhblech 9 durch den Polschuhkörper 8 direkt mit dem Polschaft 5a verbinden. Die weitere Ausführung des Rotors 3 entspricht der aus FIG 2.

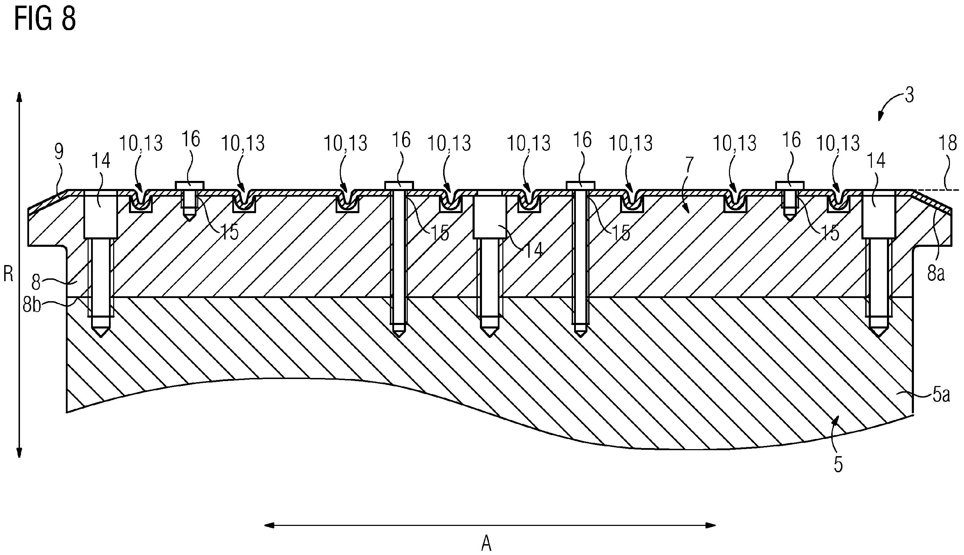

FIG 8 zeigt einen vergrößerten Längsschnitt eines Rotors 3 im Bereich eines Polschuhs 7 mit einer sechsten Ausführungsform eines Polschuhblechs 9. Das Polschuhblech 9 weist eine Profilierung 10 auf, welche mehrere, im Verhältnis zu einer Bezugsebene 18, in radiale Richtung R nach innen verlaufende Rillen 13 umfasst. Um die Realisierung radial nach innen verlaufender Rillen 13 zu ermöglichen, weist die radial äußere Oberfläche 8a des Polschuhkörpers 8 entsprechende Aussparungen auf. Durch derartige radiale nach innen verlaufende Rillen 13 wird der Spalt 6 nicht verkleinert. Die weitere Ausführung des Rotors 3 entspricht der aus FIG 7.

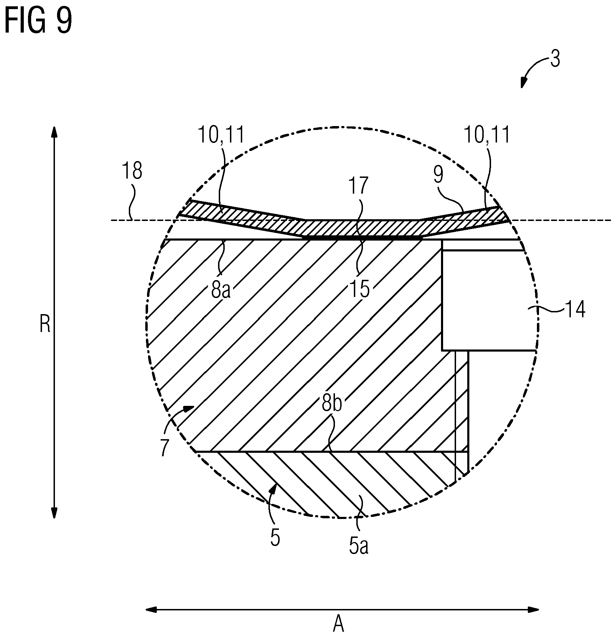

FIG 9 zeigt einen vergrößerten Ausschnitt eines Rotors 3 im Bereich eines Befestigungspunktes 15 mit einer siebten Ausführungsform eines Polschuhblechs 9. Das Polschuhblech 9 weist eine Profilierung 10 auf, welche mehrere Wölbungen 11 umfasst. Das Polschuhblech 9 ist an einem Verbindungspunkt 15 zwischen den Wölbungen 11 über eine stoffschlüssige Verbindung 17 mit der radial äußeren Oberfläche 8a des Polschuhkörpers 8 verbunden. Die stoffschlüssige Verbindung 17 ist als Schweißverbindung ausgeführt.

## Patentansprüche

1. Rotor (3) für eine elektrische rotierende Maschine (1), insbesondere eine Synchronmaschine (1a),
mit einer um eine Rotationsachse (4) rotierbaren Welle (5) und mindestens einem Polschuh (7),
wobei der Polschuh (7) einen Polschuhkörper (8) und ein Polschuhblech (9) aufweist,
wobei das Polschuhblech (9) auf einer radial äußeren Oberfläche (8a) des Polschuhkörpers (8) aufliegt, **dadurch gekennzeichnet, dass** das Polschuhblech (9) an mehreren Verbindungspunkten (15) mit dem Polschuhkörper (8) verbunden ist und dass das Polschuhblech (9) zwischen den Verbindungspunkten (15) zumindest in axialer Richtung (A) durch Wölbungen (11)
und/oder Rillen (13) flexibel ausgebildet ist.

2. Rotor (3) für eine elektrische rotierende Maschine (1), insbesondere eine Synchronmaschine (1a), mit einer um eine Rotationsachse (4) rotierbaren Welle (5) und mindestens einem Polschuh (7),
wobei der Polschuh (7) einen Polschuhkörper (8) und ein Polschuhblech (9) aufweist,
wobei das Polschuhblech (9) auf einer radial äußeren Oberfläche (8a) des Polschuhkörpers (8) aufliegt, **dadurch gekennzeichnet, dass** das Polschuhblech (9) mindestens zwei geschichtete Einzelbleche umfasst.

3. Rotor (3) nach einem der Ansprüche 1 oder 2,
wobei das Polschuhblech (9) an mehreren Verbindungspunkten (15) über Verbindungselemente (16) und/oder über eine stoffschlüssige Verbindung (17) mit dem Polschuhkörper (8) verbunden ist.

4. Rotor (3) nach einem der vorherigen Ansprüche, wobei das Polschuhblech (9) eine Profilierung (10) aufweist.

5. Rotor (3) nach Anspruch 4,
wobei die Profilierung (10)zumindest teilweise gewölbt ausgebildet ist.

6. Rotor (3) nach einem der Ansprüche 4 oder 5,
wobei die Profilierung (10) Schlitze (12) und/oder Löcher aufweist, wobei die Schlitze (12) zumindest in axiale Richtung verlaufen.

7. Rotor (3) nach einem der vorherigen Ansprüche,
wobei das Polschuhblech (9) vollflächig auf der radial äußeren Oberfläche (8a) des Polschuhkörpers (8) aufliegt.

8. Rotor (3) nach einem der vorherigen Ansprüche,
wobei das Polschuhblech (9) aus einem weichmagnetischen Material ausgebildet ist.

9. Rotor (3) nach einem der vorherigen Ansprüche,
wobei das Polschuhblech (9) eine Dicke (d) im Bereich von 1 mm bis 10 mm aufweist.

10. Rotor (3) nach einem der vorherigen Ansprüche,
wobei zwischen der radial äußeren Oberfläche (8a) des Polschuhkörpers (8) und dem Polschuhblech (9) stellenweise Hohlräume ausgebildet sind.

11. Elektrische rotierende Maschine (1), insbesondere eine Synchronmaschine (1a), mit einem Rotor (3) nach einem der Ansprüche 1 bis 10.

12. Verfahren zur Herstellung eines Rotors (3) nach einem der Ansprüche 1 bis 10.

## Claims

1. Rotor (3) for an electric rotating machine (1), in particular a synchronous machine (1a),
comprising a shaft (5) which can rotate about a rotation axis (4), and at least one pole shoe (7),
wherein the pole shoe (7) has a pole shoe body (8) and a pole shoe metal sheet (9),
wherein the pole shoe metal sheet (9) lies on a radially outer surface (8a) of the pole shoe body (8),
**characterised in that**
the pole shoe metal sheet (9) is connected at a plurality of connection points (15) to the pole shoe body (8), and
the pole shoe metal sheet (9) is configured to be flexible between the connection points (15) at least in the axial direction (A) by means of curvatures (11) and/or grooves (13).

2. Rotor (3) for an electric rotating machine (1), in particular a synchronous machine (1a),
comprising a shaft (5) which can rotate about a rotation axis (4), and at least one pole shoe (7),
wherein the pole shoe (7) has a pole shoe body (8) and a pole shoe metal sheet (9),
wherein the pole shoe metal sheet (9) lies on a radially outer surface (8a) of the pole shoe body (8), **characterised in that** the pole shoe metal sheet (9) comprises at least two layered individual metal sheets.

3. Rotor (3) according to one of claims 1 or 2,
wherein the pole shoe metal sheet (9) is connected at a plurality of connection points (15) by means of connecting elements (16) and/or by means of a firmly bonded connection (17) to the pole shoe body (8).

4. Rotor (3) according to one of the preceding claims, wherein the pole shoe metal sheet (9) has a profiling (10).

5. Rotor (3) according to claim 4,
wherein the profiling (10) is configured curved at least in sections.

6. Rotor (3) according to one of claims 4 or 5,
wherein the profiling (10) has slits (12) and/or holes, wherein the slits (12) extend at least in the axial direction.

7. Rotor (3) according to one of the preceding claims, wherein the pole shoe metal sheet (9) lies full-surface on the radially outer surface (8a) of the pole shoe body (8).

8. Rotor (3) according to one of the preceding claims, wherein the pole shoe metal sheet (9) is formed from a soft magnetic material.

9. Rotor (3) according to one of the preceding claims, wherein the pole shoe metal sheet (9) has a thickness (d) in the range of 1 mm to 10 mm.

10. Rotor (3) according to one of the preceding claims, wherein hollow spaces are formed in sections between the radially outer surface (8a) of the pole shoe body (8) and the pole shoe metal sheet (9).

11. Electric rotating machine (1), in particular a synchronous machine (1a), comprising a rotor (3) according to one of claims 1 to 10.

12. Method for manufacturing a rotor (3) according to one of claims 1 to 10.

## Revendications

1. Rotor (3) d'une machine (1) électrique tournante, notamment d'une machine (1a) synchrone,
comprenant un arbre (5) tournant autour d'un axe (4) de rotation et
au moins un épanouissement (7) polaire,
l'épanouissement (7) polaire ayant un corps (8) d'épanouissement polaire et une tôle (9) d'épanouissement polaire,
la tôle (9) d'épanouissement polaire s'appliquant à une surface (8a) extérieure radialement du corps (8) d'établissement polaire,
**caractérisé en ce que**
la tôle (9) d'épanouissement polaire est reliée, en plusieurs points (15) de liaison, au corps (8) d'épanouissement polaire et
**en ce que** la tôle (9) d'épanouissement polaire est constituée de manière souple entre les points (15) de liaison, au moins dans la direction (A) axiale, par des voussures (11) et/ou des rainures (13).

2. Rotor (3) d'une machine (1) électrique tournante, notamment d'une machine (1a) synchrone,
comprenant un arbre (5) tournant autour d'un axe (4) de rotation et
au moins un épanouissement (7) polaire,
l'épanouissement (7) polaire ayant un corps (8) d'épanouissement polaire et une tôle (9) d'épanouissement polaire,
la tôle (9) d'épanouissement polaire s'appliquant à une surface (8a) extérieure radialement du corps (8) d'épanouissement polaire,
**caractérisé en ce que** la tôle (9) d'épanouissement polaire comprend au moins deux tôle individuelles feuilletées.

3. Rotor (3) suivant l'une des revendications 1 ou 2,
dans lequel la tôle (9) d'épanouissement polaire est reliée au corps (8) d'épanouissement polaire en plusieurs points (15) de liaison par des éléments (16) de liaison et/ou par une liaison (17) à coopération de matière.

4. Rotor (3) suivant l'une des revendications précédentes, dans lequel la tôle (9) d'épanouissement polaire a un profilage (10).

5. Rotor (3) suivant la revendication 4,
dans lequel le profilage (10) est constitué cintré, au moins en partie.

6. Rotor (3) suivant l'une des revendications 4 ou 5,
dans lequel le profilage (10) a des fentes (12) et/ou des trous, les fentes (12) s'étendant au moins dans une direction axiale.

7. Rotor (3) suivant l'une des revendications précédentes, dans lequel la tôle (9) d'épanouissement polaire s'applique, par toute une surface, à la surface (8a) extérieure radialement du corps (8) d'épanouissement polaire.

8. Rotor (3) suivant l'une des revendications précédentes, dans lequel la tôle (9) d'épanouissement polaire est en un matériau à magnétisme doux.

9. Rotor (3) suivant l'une des revendications précédentes, dans lequel la tôle (9) d'épanouissement polaire a une épaisseur (d) dans la plage de 1 mm à 10 mm.

10. Rotor (3) suivant l'une des revendications précédentes, dans lequel des espaces creux sont constitués, par endroit, entre la surface (8a) extérieure radialement du corps (8) d'épanouissement polaire et la tôle (9) d'épanouissement polaire.

11. Machine (1) électrique tournante, notamment machine (1a) synchrone, ayant un rotor (3) suivant l'une des revendications 1 à 10.

12. Procédé de fabrication d'un rotor (3) suivant l'une des revendications 1 à 10.
